## Europäisches Patentamt

(19) **European Patent Office**

**Office européen des brevets**

(11) Veröffentlichungsnummer: **0 029 614**
**B1**

(12) **EUROPÄISCHE PATENTSCHRIFT**

(45) Veröffentlichungstag der Patentschrift:
17.04.85

(51) Int. Cl.⁴: **B 65 G 47/46,** B 65 G 47/74,
B 07 C 5/36

(21) Anmeldenummer: **80107500.3**

(22) Anmeldetag: **05.01.79**

(60) Veröffentlichungsnummer der früheren Anmeldung
nach Art. 76 EPÜ:

(54) **Vorrichtung zum seitlichen Ablenken von Gegenständen von einer ersten Transporteinrichtung auf eine zweite Transporteinrichtung.**

(30) Priorität: **13.01.78 DE 2801387**

(43) Veröffentlichungstag der Anmeldung:
**03.06.81 Patentblatt 81/22**

(45) Bekanntmachung des Hinweises auf die Patenterteilung:
**17.04.85 Patentblatt 85/16**

(84) Benannte Vertragsstaaten:
**BE CH DE FR GB IT LU NL SE**

(56) Entgegenhaltungen:
**DE - A - 1 548 285**
**DE - A - 2 323 028**
**DE - A - 2 330 378**
**DE - A - 2 403 404**
**DE - A - 2 557 887**
**DE - U - 6 601 375**
**FR - A - 2 031 366**
**FR - A - 2 087 171**
**US - A - 2 697 513**
**US - A - 2 974 775**
**US - A - 3 270 881**
**US - A - 3 512 638**
**US - A - 3 580 391**
**US - A - 3 982 619**

(73) Patentinhaber: **Heuft, Bernhard, Im Sonnenwinkel 14,**
**D-5475 Burgbrohl (DE)**

(72) Erfinder: **Heuft, Bernhard, Im Sonnenwinkel 14,**
**D-5475 Burgbrohl (DE)**

(74) Vertreter: **Abitz, Walter, Dr.-Ing. et al, Abitz, Morf,**
**Gritschneder P.O. Box 86 01 09, D-8000 München 86 (DE)**

BUNDESDRUCKEREI BERLIN

## Beschreibung

Die Erfindung betrifft eine Vorrichtung zum seitlichen Ablenken von Gegenständen von einer ersten Transporteinrichtung auf eine zweite Transporteinrichtung der abgelenkten Gegenstände mittels einer Mehrzahl ortsfest angeordneter Blasdüsen oder Saugdüsen, die durch eine oder mehrere Abtast- und Steuereinrichtungen in Abhängigkeit von der Position der abzulenkenden Gegenstände gesteuert werden.

Derartige Vorrichtungen finden sich z. B. in Anlagen zum Füllen von Flaschen und dienen dazu, fehlerhafte Flaschen, z. B. nicht vollständig gefüllte Flaschen oder nicht ordnungsgemäß verschlossene Flaschen, auszusondern.

Aus der FR-A-2 031 366 ist eine Vorrichtung gemäß dem Oberbegriff des Patentanspruches 1 bekannt, bei der stets die Gesamtzahl der Blasdüsen für einen einzelnen Ablenkvorgang aufeinanderfolgend eingeschaltet wird. Eine derartige Vorrichtung arbeitet nur dann zuverlässig, wenn die abzulenkenden Gegenstände alle die gleiche Form und das gleiche Gewicht besitzen.

Gegenstände mit geringerem Gewicht würden dagegen stärker abgelenkt und können dabei umkippen.

Aus der US-A-3 512 638 ist eine mit mechanischen Ablenkelementen arbeitende Vorrichtung bekannt, bei der für jedes Ablenkelement eine Abtast- und Steuereinrichtung in Form einer Lichtschranke vorgesehen ist, die die Ablenkelemente in Abhängigkeit von der Position eines abzulenkenden Gegenstandes steuert. Die Ablenkkurve ist hierbei durch die Ablenkelemente fest vorgegeben und bei jedem Ablenkvorgang werden alle Ablenkelemente eingesetzt.

Aus der DE-A-1 548 285 ist eine mit Saugdüsen arbeitende Ablenkvorrichtung bekannt. Die Saugdüsen saugen sich an einem abzulenkenden Gegenstand fest und laufen mit diesem mit. Der mechanische Aufbau ist hier zwangsläufig aufwendig und beschränkt die mögliche Fördergeschwindigkeit der Gegenstände.

Die Erfindung, wie sie im Patentanspruch gekennzeichnet ist, löst die Aufgabe, eine Ablenkvorrichtung zu schaffen, die sehr hohe Fördergeschwindigkeiten der Gegenstände zuläßt und auch Gegenstände von unterschiedlicher Form und unterschiedlichem Gewicht sicher und ohne die Gefahr eines Umkippens von der ersten Transporteinrichtung auf eine zweite Transporteinrichtung ablenkt.

Ausführungsbeispiele der Erfindung werden nachfolgend anhand der Zeichnung erläutert. Es zeigen:

Fig. 1, 2 und 3 eine Ablenkvorrichtung, bei der die Ablenkvorrichtungen durch Blasdüsen gebildet werden;

Fig. 4 die Steuerungslogik für eine Vorrichtung nach Fig. 1;

Fig. 5 und 6 Möglichkeiten für den Verlauf von Lichtschranken bei dicht aufeinanderfolgenden Gegenständen;

Fig. 7 eine Vorrichtung mit mehreren parallelen zweiten Transporteinrichtungen;

Fig. 8 eine Ausführungsform, ähnlich der von Fig. 3, wobei zusätzliche Blasdüsen zum Abbremsen der abgelenkten Gegenstände vorgesehen sind;

Fig. 9 einen Vielfach-Induktivabtaster zur Erzeugung der für die Steuerung der Ablenkeinrichtung benötigten Taktimpulse;

Fig. 10 eine erfindungsgemäße Vorrichtung mit Ablenkeinrichtungen in Form von Saugdüsen und

Fig. 11 eine Ausführungsform, ähnlich der von Fig. 8, wobei Auffangfahnen anstatt der Stabilisierungsdüsen vorgesehen sind.

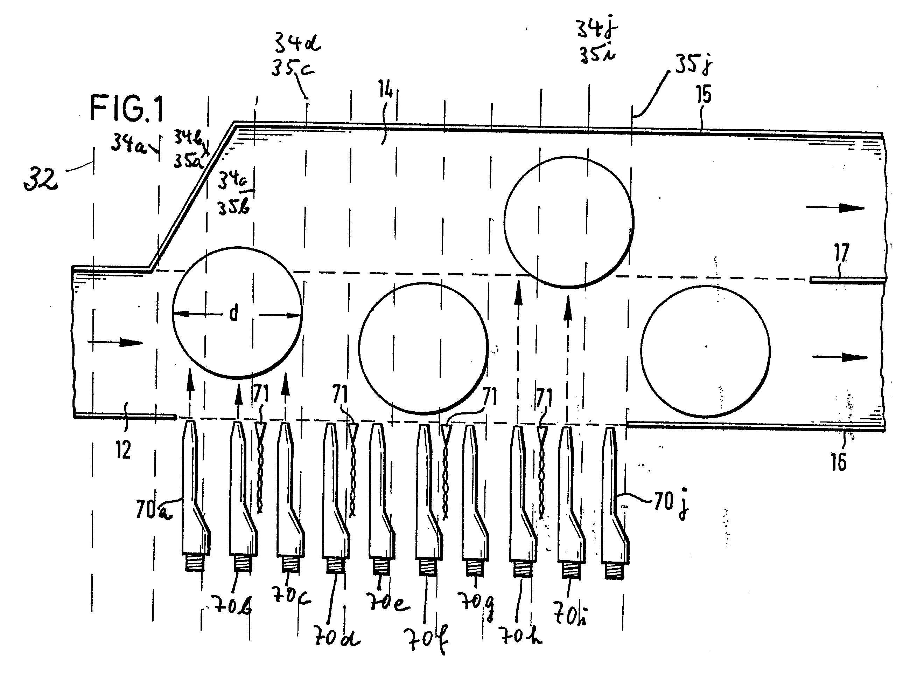

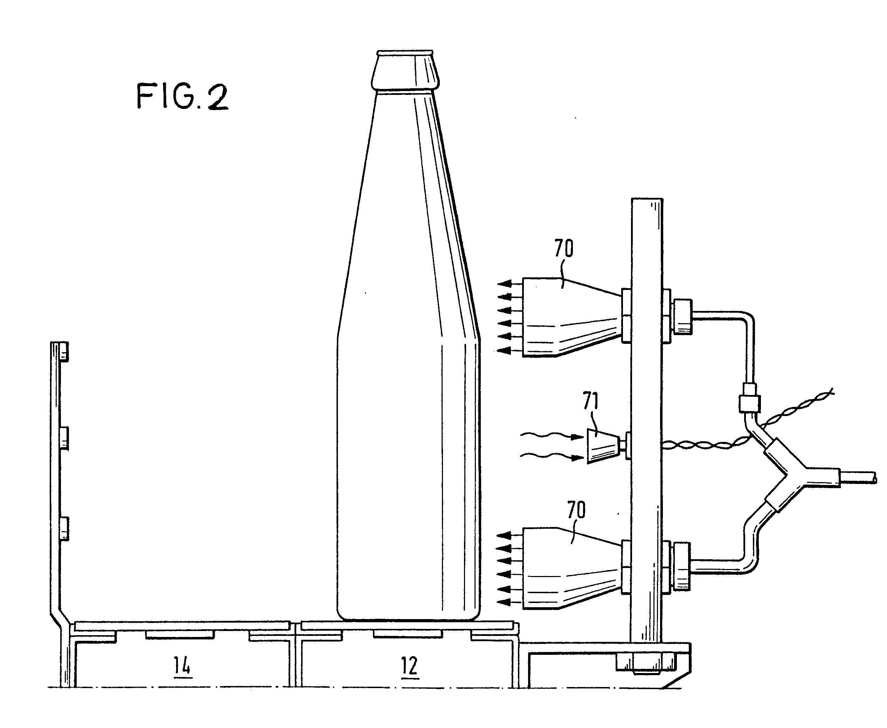

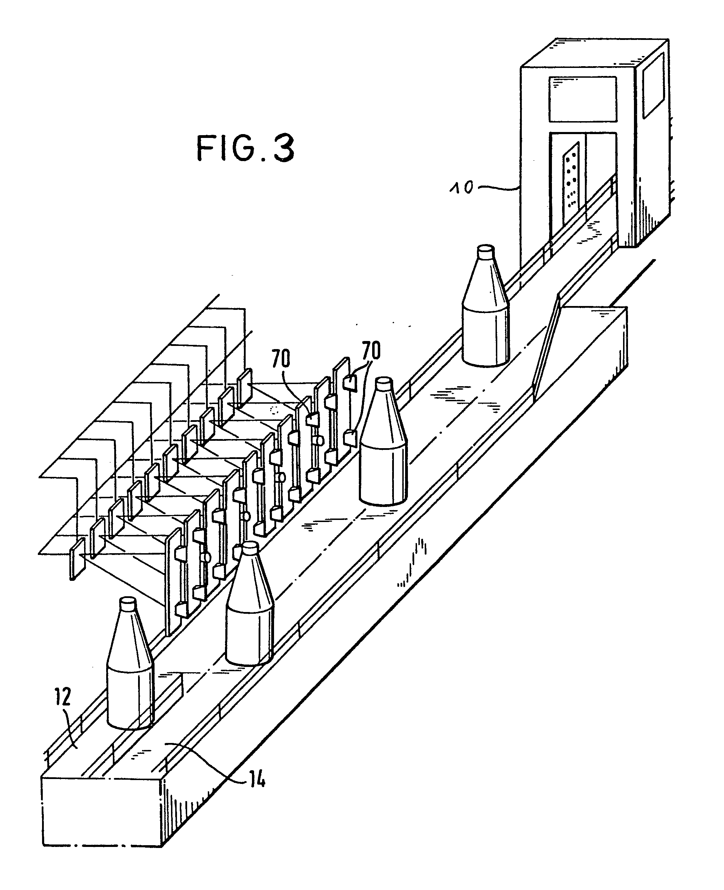

Die in den Fig. 1 bis 3 gezeigte Ablenkvorrichtung besitzt eine erste Transporteinrichtung 12 und eine zweite Transporteinrichtung 14, die z. B. aus einer Stahl- oder Kunststoff-Gliederkette bestehen können. Die Transporteinrichtungen sind seitlich durch Geländer 15, 16 und 17 begrenzt. Die zweite Transporteinrichtung verläuft parallel und unmittelbar benachbart zur ersten Transporteinrichtung. In einem bestimmten Bereich, der sogenannten Ablenkstrecke, sind die Geländer unterbrochen bzw. abgewinkelt, um ein Überleiten von Gegenständen von der ersten Transporteinrichtung auf die zweite Transporteinrichtung zu ermöglichen. In Fig. 1 sind vier Gegenstände dargestellt, von denen der erste und dritte ausgesondert, d. h. abgelenkt oder ausgeleitet werden soll, während der zweite und vierte Gegenstand auf der ersten Transporteinrichtung weiter befördert werden sollen. Der erste und der dritte Gegenstand werden von der zweiten Transporteinrichtung weiter befördert. Das Ablenken eines ausgewählten Gegenstandes erfolgt durch Blasdüsen 70n (n steht für a, b, c, . . .).

Die Blasdüsen 70 sind feststehend in dem Geländer 16 angeordnet. Die Intensität der durch die Düsen erzeugten Luftstrahlen kann gestaffelt sein und in Förderrichtung zunehmen. Die Intensität der Blasdüsen 70 ist dabei so eingestellt, daß ein abzulenkender Gegenstand schrittweise von der ersten Transporteinrichtung 12 auf die zweite Transporteinrichtung 14 verschoben wird. Um bei größeren Abständen zwischen den Gegenständen nicht unnötig Preßluft zu verbrauchen, werden die Düsen 70 dabei zweckmäßigerweise durch den abzulenkenden Gegenstand selbst gesteuert, d. h. ein- und ausgeschaltet. Außer Luft kann auch jedes andere geeignete Fluid verwendet werden. Die feststehenden Blasdüsen 70 erzeugen ein Luftkissen, das als Ablenkfläche wirkt, an der der Gegenstand ausgleiten kann.

Es werden nicht alle Düsen gleichzeitig aktiviert, sondern zu jedem Zeitpunkt nur diejenigen Düsen, die zu diesem Zeitpunkt oder unmittelbar danach zum Ablenken des Gegenstandes tatsächlich benötigt werden. Dadurch ist der Energieverbrauch gering und ist ein Ablenken auch in Fällen möglich, in denen die Gegenstände unmittelbar aufeinanderfolgen, d. h. zwischen ihnen kein Abstand vorhanden ist, ohne daß die Gegenstände, die auf der ersten Transporteinrichtung verbleiben, beeinträchtigt werden. In Fig. 1 sind z. B. die ersten drei Düsen und die achte und neunte Düse aktiviert, da sie den ersten und den dritten Gegenstand beaufschlagen, die aussortiert werden sollen.

Bei der vorausgehend beschriebenen Ausführungsform befinden sich diejenigen Düsen im aktivierten Zustand, die zu dem betreffenden Zeitpunkt oder unmittelbar danach den ausgewählten Gegenstand beaufschlagen. In einer anderen Ausführungsform können sich zu jedem Zeitpunkt diejenigen Düsen im aktivierten Zustand befinden, die mit dem unmittelbar vorausgehenden und dem unmittelbar nachfolgenden Gegenstand, die auf der ersten Transporteinrichtung verbleiben, nicht kollidieren. Dadurch befindet sich während eines Ablenkvorganges die maximale Anzahl von Düsen im aktivierten Zustand.

Zur Feststellung der Gegenstände, die abgelenkt werden müssen, werden bestimmte Merkmale des Gegenstandes, z. B. Füllstandshöhe in Flaschen oder das Vorhandensein eines Flaschenverschlusses beim Sortieren von Flaschen, durch einen Prüfer 10 mechanisch, z. B. durch eine Waage oder Abtastelemente, oder photoelektrisch, geprüft. Die Prüfung findet durch den Prüfer 10 an einer Prüflinie 32 statt, die sich vorzugsweise unmittelbar vor der Ablenkstrecke befindet. Wenn die Prüfung zu einem früheren Zeitpunkt erfolgt, so muß sie durch geeignete Mittel, z. B. ein Schieberegister, zeitlich so verzögert oder gespeichert werden, daß das Prüfergebnis der Steuereinrichtung für die Düsen zu dem Zeitpunkt zugeführt wird, zu dem der betreffende Gegenstand in die Ablenkstrecke eintritt.

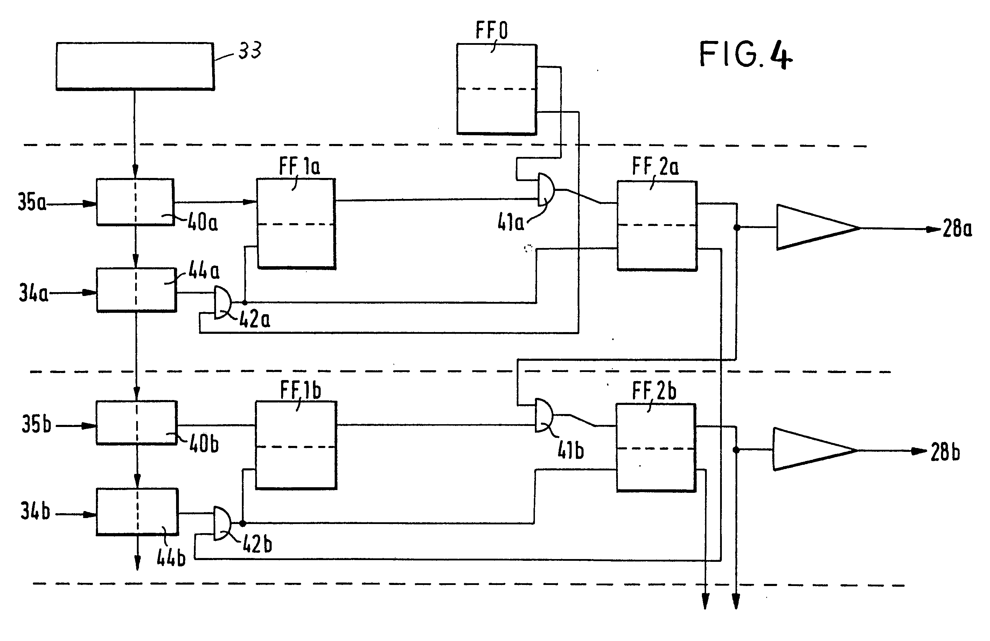

Die Einrichtung zum Steuern der Düsen weist im einfachsten Fall die vorausgehend erwähnten Prüfeinrichtungen, Lichtschranken 34a bis 34j zur Erzeugung eines Inaktivierungsbefehles, Lichtschranken 35a bis 35j zur Freimeldung der jeweiligen Düse und eine Steuerelektronik (Fig. 4) auf. Bei der in Fig. 1 und 4 dargestellten Steuereinrichtung wird dabei diejenige Alternative gezeigt, bei der jeweils die maximale Anzahl von Düsen aktiviert ist, d. h. alle Düsen, die nicht mit dem unmittelbar vorausgehenden und dem unmittelbar nachfolgenden Gegenstand, die nicht abgelenkt werden sollen, kollidieren. Die Lichtschranke 35a gibt nach dem Durchgang des Gegenstandes, der dem abzulenkenden Gegenstand vorausgeht, eine Freimeldung ab. Die Freimeldung wird durch ein Zeitglied 40a um eine Zeitdauer t verzögert und auf den Setzeingang des Flip-Flops 1a gegeben. Der Betrag der Zeitverzögerung hängt von der Geschwindigkeit der ersten Transporteinrichtung, die durch eine Meßeinrichtung 33 gemessen wird, der Ansprechzeit der Steuereinrichtung und der Lage der Lichtschranke 35a ab. Die Freimeldung ist eine Voraussetzung für das Aktivieren einer Düse, und die Zeitverzögerung soll so bemessen sein, daß derjenige Gegenstand, von dem die Freimeldung abgeleitet wird, von der auf Grund der Freimeldung dann aktivierten Düse nicht mehr getroffen wird. Wie erwähnt, hängt die Zeitverzögerung dann von der Geschwindigkeit der Transporteinrichtung ab. Da sich die Transportgeschwindigkeit während des Betriebes ändern kann, ist die durch das Zeitglied 40a eingeführte Verzögerung vorzugsweise variabel. Bei kleiner Transportgeschwindigkeit ist die Zeitverzögerung dabei größer als bei hoher Transportgeschwindigkeit. Das am normalen Ausgang des Flip-Flops 1a erhaltene Signal wird über ein UND-Glied 41a dem Setzeingang eines Flip-Flops 2a zugeführt. Der zweite Eingang des UND-Gliedes 41a ist mit dem normalen Ausgang eines Flip-Flops 0 verbunden, das von der Prüfeinrichtung gesetzt wird und sich z. B. im gesetzten Zustand befindet, wenn der Gegenstand, der dem Gegenstand folgt, von dem die Freimeldung abgeleitet wurde, aussortiert werden soll, da er z. B. fehlerhaft ist. Der normale Ausgang des Flip-Flops 2a steuert über einen Leistungstreiber ein Steuerventil 28, das die Düse 70a aktiviert. Die Düse 70a wird immer aktiviert, wenn sich ein abzulenkender Gegenstand ihr nähert und sich der unmittelbar vorausgehende Gegenstand bereits an ihr vorbeibewegt hat.

Die der Düse 70b zugeordnete Steuerelektronik ist, abgesehen davon, daß der zweite Eingang des UND-Gliedes 41b nicht mit dem Flip-Flop 0, sondern mit dem normalen Ausgang des Flip-Flops 2a verbunden ist, identisch der der Düse 70a zugeordneten Steuerelektronik. Die Düse 70b wird demnach aktiviert, wenn eine Freimeldung der dieser Düse zugeordneten Lichtschranke vorliegt und wenn die Düse 70a aktiviert ist. Die Steuerelektronik der weiteren Düsen ist analog der Düse 70b. Eine beliebige Düse wird demnach aktiviert, wenn für diese Düse eine Freimeldung vorliegt und die vorausgehende Düse aktiviert ist. Durch weitere Lichtschranken 34n wird ein Inaktivierungsbefehl (IA-Befehl) von der Vorderkante jedes Gegenstandes abgeleitet. Jeder Düse 70n ist dabei neben einer Lichtschranke 35n für die Freimeldung auch eine Lichtschranke 34n für den IA-Befehl zugeordnet. Der IA-Befehl wird über Zeitglieder 44n verzögert. Die Lichtschranke 34n für den IA-Befehl einer Düse befindet sich dabei etwa eine Strahlbreite vor der Lichtschranke für die Freimeldung der betreffenden Düse, wenn Zeitglieder 40n und 44n mit gleicher Zeitverzögerung verwendet werden. Der Ausgang des Zeitgliedes 44a ist mit dem einen Eingang eines UND-Gliedes 42a verbunden. Der andere Eingang des UND-Gliedes 42a ist mit dem invertierten Ausgang des Flip-Flops 0 verbunden. Durch ein L-Ausgangssignal des UND-Gliedes 42 wird das Flip-Flop 1a und das Flip-Flop 2a rückgesetzt. Durch Rücksetzen des Flip-Flops 2a gelangt ein 0-Signal zu dem Leistungstreiber der Düse 70a und wird diese Düse dadurch eingefahren. Das Ausschalten (= Inaktivieren) der Düse 70n erfolgt demnach, wenn ein Gegenstand die IA-Befehl-Lichtschranke 34 unterbricht und das Flip-Flop 0 rückgesetzt ist. Diese Bedingungen sind nach dem Ablenken eines Gegenstandes erstmals bei dem ersten nachfolgenden, nicht abzulenkenden Gegenstand erfüllt. Das UND-Glied 42a hat eine doppelte Aufgabe, nämlich erstens wird durch es ein unnötiges Inaktivieren der Düsen verhindert, falls zwei aufeinanderfolgende Gegenstände abgelenkt werden sollen, und zweitens wird durch es verhindert, daß durch den IA-Befehl, der von einem abzulenkenden Gegenstand abgeleitet wird, eine Düse inaktiviert wird, bevor sich dieser Gegenstand an dieser Düse vorbeibewegt hat.

Die Düse 70b wird ausgeschaltet, wenn die betreffende IA-Befehl-Lichtschranke 34b durch einen Gegenstand unterbrochen wird und die vorausgehende Düse 70a ausgeschaltet ist, d. h. das Flip-Flop 2a rückgesetzt ist. Die Düsen 70c bis 70j werden unter analogen Bedingungen ausgeschaltet. In der Praxis arbeitet die Steuerungseinrichtung in der Weise, daß durch den letzten fehlerfreien Gegenstand z. B. die ersten fünf Düsen 70a bis 70e freigemeldet sind. Wenn dann von der Prüfeinrichtung ein fehlerhafter Gegenstand festgestellt wird, so wird das Flip-Flop 0 gesetzt und werden praktisch gleichzeitig die ersten fünf Düsen aktiviert. Die Düsen 70f, 70g usw. werden erst dann aktiviert, wenn sie ebenfalls freigemeldet sind, d. h. die ihnen zugeordneten Freigabebefehl-Lichtschranken 35f, 35g usw. nicht mehr durch den letzten fehlerfreien Gegenstand unterbrochen sind.

Der Einfachheit halber ist bisher angenommen worden, daß sich die Lichtschranken 34a bis 34h und 35a bis 35h an den in Fig. 1 entsprechend bezeichneten Linien befinden. Zum Beispiel bei Flaschen, die am Flaschenhals abgetastet werden, stellen die unterbrochenen Linien, die mit 34a bis 34h und mit 35a bis 35h bezeichnet sind, nicht die tatsächlichen Abtastlinien, d. h. die Position der Lichtschranken dar, sondern markieren sie die Stelle, an der sich die Vorderkante bzw. Hinterkante des steuernden Gegenstandes im Moment der Abtastung, d. h. der Erzeugung des Steuerimpulses befindet. Bei der tatsächlichen Lage der Lichtschranken ist die Fördergeschwindigkeit und die Ansprechzeit der Düsen zu berücksichtigen. Die Lichtschranken müssen daher eine Distanz vor den zugeordneten Düsen angeordnet werden, die sich im wesentlichen aus dem Produkt von Fördergeschwindigkeit und der Ansprechzeit ergibt.

Je Düse werden normalerweise eine Freimelde-Lichtschranke (Dunkel-Hell-Übergang) und eine IA-Befehl-Lichtschranke (Hell-Dunkel-Übergang) benötigt. Liegt die Ansprechzeit der Düse n beim Aktivieren etwa in der gleichen Größenordnung wie die Ansprechzeit der Düse n+1 beim Abschalten, dann kann man die Freimelde-Lichtschranke von n und die IA-Befehl-Lichtschranke von n+1, wie in Fig. 1 gezeigt, zu einer einzigen Lichtschranke zusammenfassen, von deren Ausgangssignal durch Differenzieren die dem Hell-Dunkel-Übergang entsprechende Flanke zum IA-Impuls und die dem Dunkel-Hell-Übergang entsprechende Flanke zum Freimeldeimpuls wird.

Es ist auch möglich, nicht für jede Düse n getrennte Lichtschranken 34n und 35n vorzusehen, sondern insgesamt nur eine einzige IA-Befehl-Lichtschranke 34 und eine einzige Freimelde-Lichtschranke 35 am Eingang der Ablenkvorrichtung vorzusehen, z. B. an der Position der obengenannten Lichtschranke 35a und 34a. Die Freimeldungen und IA-Befehle für die Düsen 70n werden dann dadurch erhalten, daß die von der einzigen Freimeldungs-Lichtschranke und der einzigen IA-Befehl-Lichtschranke abgeleiteten Signale entsprechend der Fördergeschwindigkeit der ersten Transporteinrichtung und dem Abstand der Düsen zeitlich verzögert werden.

Um Fehlfunktionen auszuschließen, muß die Lage der Abtastsysteme so gewählt werden, daß bei vorgegebener Form und vorgegebenem Abstand der Gegenstände die einzelnen Gegenstände sicher voneinander unterschieden (aufgelöst) werden können und die Triggerimpulse (Freimeldungen, IA-Befehle) mit einer bestimmten, im wesentlichen von der Geschwindigkeit der Gegenstände abhängigen Genauigkeit reproduziert werden können.

Bei größeren Abständen (so groß, daß der Nachfolger eines abzulenkenden Gegenstandes diesen während des Ausleitprozesses nicht überholt) können Lichtschranken, die in Blasrichtung der Düsen strahlen, sicher die geforderten Triggerimpulse (Freimeldung bzw. IA-Befehl) liefern. Hierbei ist es unerheblich, daß bei dem Prinzip der Steuerung auf Vorgänger und Nachfolger der auszuleitende Gegenstand selbst auch Triggerimpulse liefert, da diese Impulse durch die in Fig. 4 angegebene Schaltung unterdrückt werden. Bei kleineren Abständen zwischen den Gegenständen bestimmt allein deren Form die Lage und Richtung der Lichtschranken.

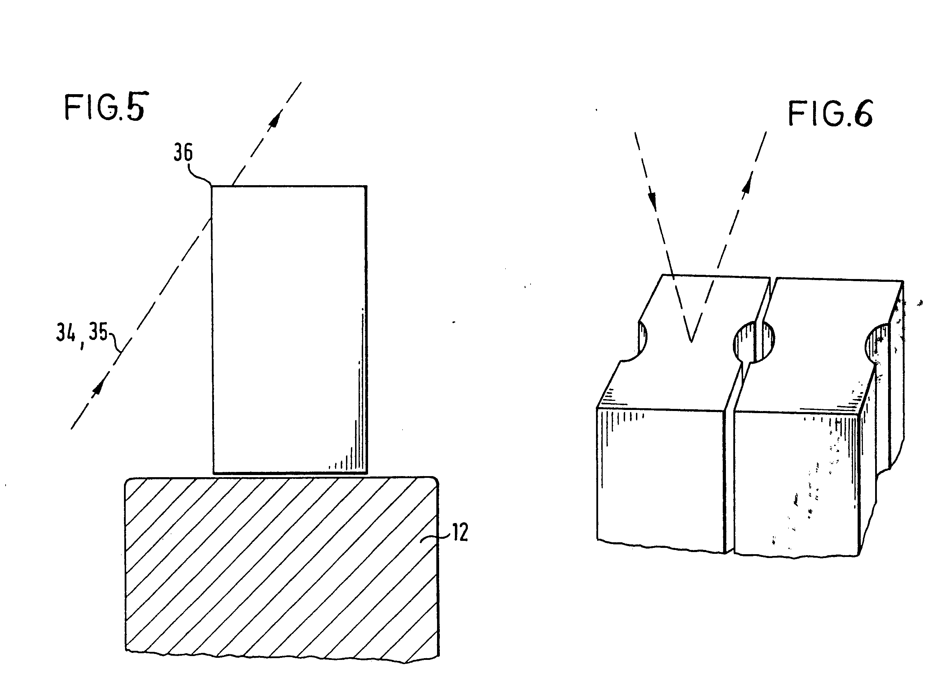

So wird man z. B. Flaschen in Halshöhe abtasten, wobei die Richtung der Lichtschranken etwa der der Winkelhalbierenden des von Ablenkebene und erster Transporteinrichtung gebildeten stumpfen Winkels entspricht. Durch schräg nach oben oder unten verlaufende Lichtschranken (Fig. 5) können Gegenstände abgetastet werden, die zusammen keine kontinuierliche, in Förderrichtung verlaufende Kante 36 bilden, z. B. zylindrische Gegenstände wie Konservendosen. Gegenstände, die zusammen keine kontinuierlich geschlossene Oberfläche bilden, können mit geeigneten Reflexlichtschranken von oben oder von der Ausleitseite abgetastet werden (Fig. 6).

Der Lauf der einzelnen Gegenstände kann außerdem durch induktive oder kapazitive Näherungsschalter, Ultraschall-, Luftschranken etc. oder mit Video-(CCD)-Kameras verfolgt werden.

Solche Kamerasysteme werden nicht nur bei schwierig aufzulösenden Gegenständen eingesetzt, sondern auch bei Ablenkvorrichtungen, die verschiedene Ausführungsformen bestimmter Gegenstände in wechselndem Betrieb bearbeiten müssen (z. B. Füllstands- und Verschlußkontrolle bei auf mehreren Flaschensorten einstellbaren Getränkeabfüllanlagen).

Die Vorteile der vorausgehend beschriebenen Steuerungsverfahren bestehen darin, daß die Düsen zum frühesten möglichen Termin aktiviert werden.

Die Unabhängigkeit der Steuerung von dem auszuleitenden Gegenstand selbst ist vorteilhaft, da die Steuerung auf die Weise von der Form und der Lage eines Gegenstandes unabhängig ist. Wird die Steuerung dagegen von dem abzulenkenden Gegenstand selbst abgeleitet, so wird die Erfassung verschiedenartiger Gegenstände durch Lichtschranken schwierig oder unlösbar. Durch die Steuerung der Düsen in Abhängigkeit von dem vorausgehenden und dem nachfolgenden Gegenstand wird es zum Beispiel möglich, aus einer Reihe zylindrischer Flaschen Flaschen anderer Form, z. B. viereckige Flaschen, oder umgefallene Flaschen und sogar Flaschenböden und allgemein zerbrochene Flaschen und Glasbruch auszusortieren. Mit bekannten Sortiergeräten ist dies nicht möglich.

Die Vorteile der Ablenkeinrichtungen in Form von Blasdüsen sind die höhere Arbeitsgeschwindigkeit (keine trägen Massen sind mehr zu bewegen) und der geringere Verschleiß der Ablenkvorrichtung.

Es ergeben sich jedoch besondere Schwierigkeiten, deren Behebung sich die vorliegende Erfindung zur Aufgabe gestellt hat: Angenommen, es werden zur Erzeugung des Luftkissens zehn Düsen 70 in 3 cm Abstand verwendet und die Intensität sei so eingestellt, daß bei maximaler Fördergeschwindigkeit und bei maximaler Reibung die Gegenstände mit maximalem Gewicht gerade noch ausgeleitet werden. Bei dieser Einstellung würde z. B. die Blaskraft bereits der ersten fünf Düsen genügen, um einen relativ leichten Gegenstand abzulenken; die weiteren fünf Düsen würden dann den schon abgelenkten Gegenstand an das äußere Geländer der zweiten Transporteinrichtung 14 drücken, womit die Gefahr verbunden ist, daß ein labiler Gegenstand (z. B. Flaschen) umkippt. Der Gegenstand könnte auch eine zu hohe Geschwindigkeit erreichen und beim Aufprall auf das äußere Geländer der zweiten Transporteinrichtung beschädigt werden. Dieses Problem wird durch eine Blasdüsen-Steuereinrichtung beseitigt, die nachfolgend beschrieben wird:

Eine Erkennungseinrichtung ermittelt die Geschwindigkeitskomponente senkrecht zur Transporteinrichtung und/oder die Entfernung des abzulenkenden Gegenstandes zu den Düsen 70. Aufgrund dieser Information kann die Blasdüsen-Steuereinrichtung die Anzahl der blasenden Düsen so beschränken, daß eine optimale Ablenkung auf die zweite Transporteinrichtung gewährleistet ist.

Bei dem oben angeführten Beispiel genügt es z. B., wenn nur die ersten vier Düsen 70 blasen und dann die Folge unterbrochen würde, denn etwa in Höhe der vierten Düse ist die parabelähnliche Ablenkkurve des Gegenstandes schon sehr steil — d. h. die Geschwindigkeitskomponente senkrecht zur ersten Fördereinrichtung ist hoch — und das bedeutet, daß sich der Gegenstand jetzt ohne äußere Kraft alleine durch seine Masseträgheit gänzlich auf die zweite Transporteinrichtung hinüber bewegt.

Der Reibungswiderstand zwischen Gegenstand und Transporteinrichtung vermindert dabei wieder die Geschwindigkeit senkrecht zur Transporteinrichtung, so daß man bei geeigneter Wahl des Abschaltzeitpunktes sogar ein Anstoßen an das äußere Geländer der zweiten Transporteinrichtung vermeiden kann.

Die Steilheit der Ablenkkurve hängt von der Masse der Gegenstände, der Transportgeschwindigkeit, der Reibung und der Intensitätsstaffelung der Düsen ab. Diese Staffelung der Intensitäten und die Intensitäten selbst werden so gewählt, daß bei labilen Gegenständen eine flache Ablenkkurve entsteht.

Es können auch alle Düsen mit der gleichen Intensität blasen. Diese Ausführung erspart die Drosselventile vor einem Teil der Düsen. Die ersten Düsen können mit einer hohen Intensität blasen, um die Haftreibung zwischen dem abzuleitenden Gegenstand und der Transporteinrichtung zu überwinden und ihn senkrecht zur Transportrichtung zu beschleunigen, während die nachfolgenden Düsen in der Intensität schwächer sind und nur die Gleitreibung des Gegenstandes ausgleichen. Dies ergibt eine flache Ablenkkurve und ist daher bei labilen Gegenständen vorteilhaft. Es ist auch möglich, die Intensitäten der letzten Düsen wieder langsam zu steigern, da mit wachsendem Abstand von den Düsen die Krafteinwirkung auf den abzulenkenden Gegenstand geringer wird. Weiterhin kann man die letzten Düsen in ihrer Intensität abschwächen, um ein Abbremsen durch zunehmenden Einfluß der Gleitreibung zu gewährleisten.

Labile Gegenstände relativ großer Höhe (z. B. Flaschen) kann man statt mit einer Düsenreihe, die ihre Druckkräfte in den Schwerpunkten der Gegenstände angreifen läßt, mit mehreren übereinanderliegenden Reihen von Düsen ausleiten. Somit würden die einzelnen Ablenkeinrichtungen aus mehreren übereinanderliegenden Düsen bestehen. Die Düsen einer Ablenkeinrichtung müssen dabei nicht mit gleicher Intensität blasen.

Die Gefahr des Umfallens abzulenkender Gegenstände kann z. B. dadurch vermindert werden, daß die unteren Düsen mit stärkerer Intensität blasen (Angriffspunkt der stärksten Ablenkkraft, etwa gleich dem Angriffspunkt der stärksten Gegenkraft).

Der Winkel gegenüber der Transportrichtung, in dem die Düsen blasen, hängt neben der Folgedichte und den Stabilitätseigenschaften von der Relativgeschwindigkeit der zweiten Transporteinrichtung bzw. davon ab, ob beim Ausleitvorgang die Geschwindigkeit verzögert oder beschleunigt wird oder gleich bleibt. Läuft die zweite Transporteinrichtung z. B. langsamer als die erste, so können die Düsen 70 die abzulenkenden Gegenstände gleichzeitig abbremsen, indem sie etwas gegen die Förderrichtung blasen. Die Düsen müssen nicht alle im gleichen Winkel zu der Förderrichtung blasen. Zum Abbremsen der abzulenkenden Gegenstände können z. B. die letzten Düsen in zunehmendem Ausmaß gegen die Förderrichtung geneigt sein.

Der Abstand in Transportrichtung zwischen den einzelnen Düsen hängt von dem Durchmesser der auszuleitenden Gegenstände sowie von der gewünschten Form des Luftkissens ab. Bei einem bekannten Durchmesser (d) der zu sortierenden Gegenstände ergibt ein Düsenabstand von kleiner als d ein kontinuierliches Luftkissen, auf welchem ein Gegenstand glatt abgelenkt wird, da zu jedem Zeitpunt der Blasstrahl mindestens einer Düse auf den Gegenstand trifft. Bei einem Düsenabstand $\geq$ d wird sich das kontinuierliche Luftkissen zunehmend in einzelne Luftströße (Luftpolster vor jeder einzelnen Düse) auflösen. Das glatte Ablenken wird zu einem schrittweisen Weiterschieben auf die zweite Transporteinrichtung, wobei durch jede Düse die Haftreibung des abzulenkenden Gegenstandes neu überwunden werden muß, falls der Gegenstand zwischen den einzelnen Ablenkeinrichtungen zum Stillstand auf der ersten Transporteinrichtung kommt. Vorzugsweise ist der Abstand der Düsen 70 kleiner als der Durchmesser der Gegenstände.

Setzt man statt einer einzigen zweiten Transporteinrichtung 14 mehrere zweite Transporteinrichtungen ein, so kann auch eine Viel-Kanal-Ablenkung realisiert werden. Je nachdem, bei welcher Ablenkeinrichtung die Düse nicht mehr eingeschaltet wird, wird der Gegenstand auf eine bestimmte der zweiten Transporteinrichtungen abgelenkt.

Die von der Erkennungseinrichtung abgegebenen Signale können die Arbeitsweise der Düsen aber auch in einer anderen Weise beeinflussen:

Bei der oben beschriebenen Ausführungsform werden beim Überschreiten eines bestimmten Punktes der Ablenkkurve die Düsen aller folgenden Ablenkeinrichtungen abgeschaltet bzw. nicht eingeschaltet.

Es ist aber auch möglich, anhand der von der Erkennungseinrichtung gelieferten Meßwerte die gesamte Form der Ablenkkurve zu überwachen. Die Erkennungseinrichtung liefert Daten über das Ausmaß der bereits erfolgten Ablenkung. Ein zur Steuerung eingesetzter Mikroprozessor analysiert laufend diese Daten und steuert die Luftkissenweiche derart, daß alle Gegenstände unabhängig von ihrem Gewicht und der Transportgeschwindigkeit die gleiche, möglichst flache Ablenkkurve beschreiben. Ergibt sich zum Beispiel, daß ein leichter Gegenstand auf einer zu steilen Ablenkkurve abgelenkt wird, so reagiert die Blasdüsen-Steuereinrichtung mit Intensitätsverminderung bzw. Verkürzung der Einschaltdauer der Düsen.

Um exakt die gleiche Ablenkkurve zu reproduzieren, muß die Erkennungseinrichtung in der Ablenkstrecke möglichst viele und genaue Abstands-Daten liefern und müssen evtl. mehrere Ventile mit Druckminderern pro Düse vorgesehen werden bzw. die Einschaltdauer der Düsen verkürzt werden.

Die Erkennungseinrichtung muß nicht nur Abstand- und/oder Geschwindigkeitsdaten liefern, sie muß auch ein weiteres Signal oder Daten liefern, die die Lage des Meßpunktes in Transportrichtung angibt. Damit wird die eindeutige Zuordnung eines Meßwertes zu einem auszulenkenden Gegenstand erst möglich und so kann dann das Steuerungsprogramm des Mikroprozessors (oder die Steuerelektronik) die zu einem Gegenstand gehörende Ausblasfolge abbrechen, während ein anderer Gegenstand weiter ausgeblasen wird. Solche Erkennungseinrichtungen kann man mit mehreren optischen Winkeltastern, Reflextastern und induktiven und kapazitiven Gebern, Licht- oder Ultraschall-Laufzeitmeßgeräten, einer oder mehrerer CCD-Kameras bzw. Video-Kameras etc. realisieren.

Vorzugsweise werden als Erkennungseinrichtung Ultraschallwandler 71 verwendet.

Das Auftreffen eines Preßluftstrahls auf die Oberfläche eines auszuleitenden Gegenstandes erzeugt nämlich Schall, hauptsächlich Ultraschall. Durch Resonanzerscheinungen heben sich bestimmte Schallfrequenzen aus dem Untergrund-Rauschen hervor. Amplitude und Höhe dieser Frequenzen hängen von der Intensität des auftreffenden Luftstrahls, die wiederum also von der Entfernung des Gegenstandes von den Düsen abhängt und von der Geschwindigkeit des Gegenstandes, senkrecht zur Transportrichtung (Doppler-Effekt) ab.

Durch Ultraschall-Wandler 71 lassen sich diese Frequenzen aufnehmen und durch eine nachgeschaltete Auswert-Elektronik kann man die gewünschten Informationen über Geschwindigkeit und Abstand erhalten. Durch eine einfache Amplitudenauswertung oder durch Laufzeitmessung des bei dem Ablenkvorgang erzeugten akustischen Frequenzgemisches ist eine Entfernungsbestimmung möglich. Man kann z. B. die Zeitdifferenz zwischen dem Beginn des sogenannten weißen Untergrund-Rauschens (hervorgerufen durch die blasende Düse) bzw. zwischen dem Auftreten einer bestimmten Frequenz, die die Preßluft beim Passieren der Düsenöffnung erzeugt, und dem Eintreffen des auf der Gegenstandsoberfläche erzeugten oder von ihr reflektierten Schalls, messen; die gemessene Zeitdifferenz ergibt sich aus den durch den Abstand »Gegenstand — Düse« bestimmten Laufzeiten, nämlich aus der Zeit vom Preßluftaustritt bis zum Auftreffen auf der Oberfläche plus der Laufzeit des Schalls von der Oberfläche zum Ultraschall-Wandler bzw. aus der Laufzeit des Schalls von der Düse zur Oberfläche und zurück zum Wandler sowie aus einigen konstanten Laufzeiten und Faktoren (Laufzeit des Schalls von der Düse zum Wandler, Druck).

Es besteht noch eine weitere Möglichkeit zur Steuerung der Ablenkkurve:

Ist von jedem abzulenkenden Gegenstand Form und vor allem Gewicht bekannt, wobei ein vorgeschalteter Prüfer (z. B. Waage) die Gewichtsbestimmung durchführen kann, so kann die Düsen-Steuereinrichtung den Ablenkvorgang nach vorher eingegebenen Erfahrungswerten steuern, wobei die oben beschriebene Erkennungseinrichtung nicht benötigt wird.

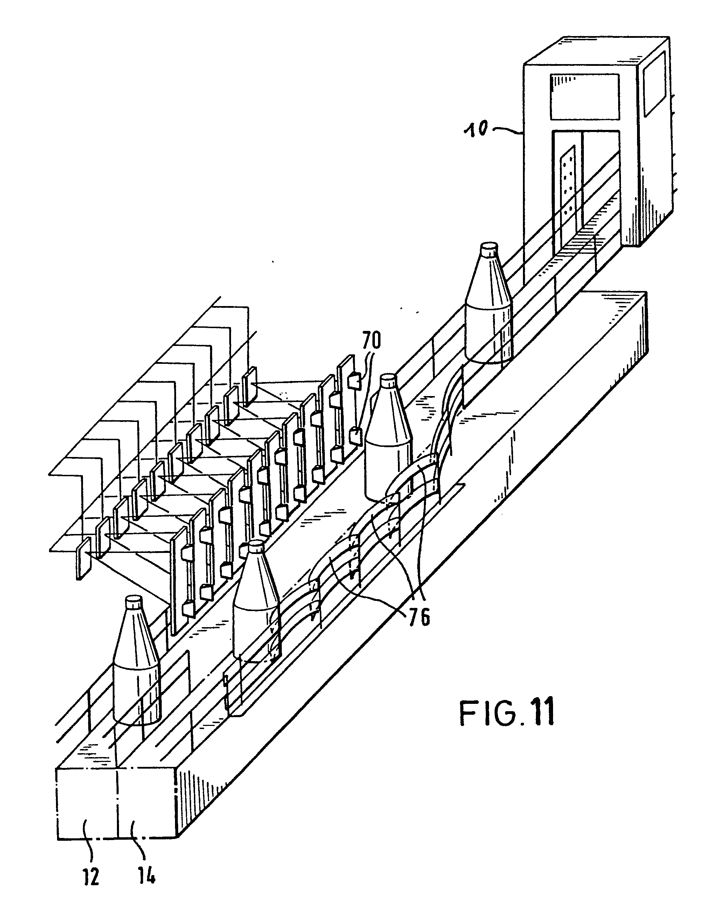

Bei labilen Gegenständen besteht die Gefahr, daß sie nach dem Abschalten der Düsen beim Abbremsen durch die Reibung umkippen. Dies kann z. B. durch ein hochgezogenes gegenüberliegendes Geländer mit Auffangfahnen 76 (Fig. 11) verhindert werden. Vorzugsweise sind eine oder mehrere Stabilisierungsdüsen 72 vorgesehen, die in Fahrtrichtung schräg gegenüber den Ablenkeinrichtungen und in der Höhe über dem Schwerpunkt der auszuleitenden Gegenstände angebracht sind und zur Stabilisierung der abzulenkenden Gegenstände entgegen der Ablenkrichtung blasen. Es kann günstig sein, Stabilisierungsdüsen 72 schräg nach oben auszurichten, um störende Turbulenzen abzuschwächen. Die Ansteuerung dieser Stabilisierungsdüsen erfolgt in der Weise, daß die Stabilisierungsdüsen unmittelbar nach der letzten Ablenkeinrichtung, die eingeschaltet oder aktiviert wurde, eingeschaltet werden. Wie bei den Ablenkeinrichtungen in Form von Segmenten können auch die Stabilisierungsdüsen entsprechend der Weiterbewegung des Gegenstandes nacheinander eingeschaltet werden.

Die Anordnung der Stabilisierungsdüsen hängt von der Art der zweiten Transporteinrichtung ab.

Die beschriebene Ausführung mit Ultraschallwandlern arbeitet zuverlässig für Flaschengewichte zwischen 0,15 und 1,5 kg bei Transportgeschwindigkeiten zwischen 0,5 und 1,5 m/sec bzw. zwischen 0,5 und 2,5 m/sec bei max. 0,4 kg Flaschengewicht. Nach oben sind Geschwindigkeiten und Gewichte relativ unkritisch, da man die Anzahl der Düsen beliebig vergrößern kann, während leichte Gegenstände bei langsamen Geschwindigkeiten sehr steil ausgelenkt werden, und daher hohe Anforderungen an die Meßeinrichtungen stellen. Für leichte Gegenstände und kleine Transportgeschwindigkeiten werden vorzugsweise die ersten sechs Düsen in ihrer Intensität durch Reduzierventile abgeschwächt und nach steigender Intensität gestaffelt. Das gegenüberliegende Geländer 15 biegt erst und unmittelbar in der Ablenkstrecke ab (Außengeländer der zweiten Transporteinrichtung). Weiterhin ist es in der Ablenkstrecke mit Auffangfahnen 76 (Fig. 11) versehen, die ein hartes Anstoßen der ausgeleiteten Flaschen an das Geländer 15 verhindern. Die Auffangfahnen, die gegenüber der vierten und den folgenden Düsen angebracht sind, dienen gleichzeitig als Abschalteinrichtungen, indem sie auf induktive Näherungsschalter wirken. Die Ultraschallwandler werden daher bei dieser Ausführungsform nicht benötigt. Eine solche Zwangsführung der ausgeleiteten Flaschen erlaubt eine Variation der Geschwindigkeit von Null an aufwärts.

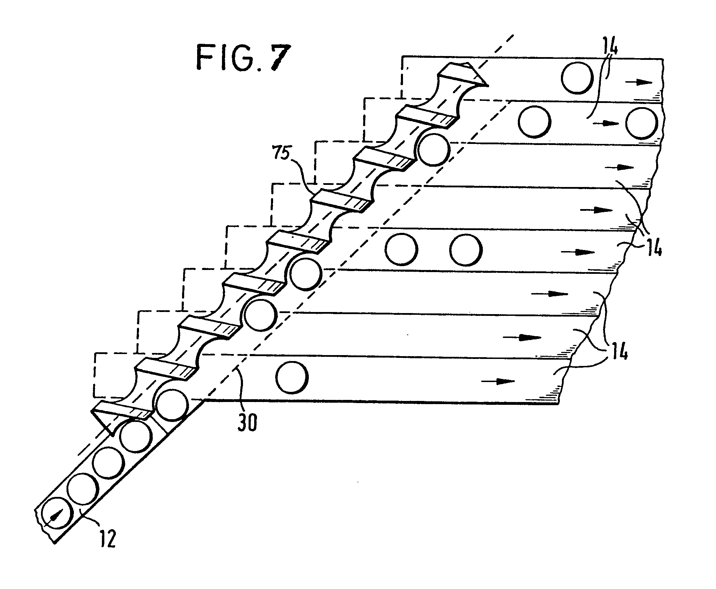

Die erfindungsgemäße Ablenkeinrichtung kann auch so eingesetzt werden, daß die Gegenstände von einer ersten Transporteinrichtung wahlweise auf verschiedene weitere Transporteinrichtungen abgelenkt werden. Es können dazu mehrere Vorrichtungen der in Fig. 1 gezeigten Art hintereinander geschaltet werden. Es ist jedoch auch möglich, die in Fig. 7 gezeigte Anordnung zu wählen, bei der die von einer ersten Transporteinrichtung herangeführten Gegenstände zwischen einer sich drehenden Schnecke 75 und mehreren eingeschalteten Reihen von Ablenkdüsen bis zu einer bestimmten der zweiten Transporteinrichtungen gefördert wird, von der es durch Abschalten der zugeordneten Ablenkdüsen weitergefördert wird. Die erste Transporteinrichtung 12 und die Schnecke 75 laufen dabei parallel zu der Ablenkfläche 30 der Reihen von Ablenkdüsen. Trotz des in Fig. 7 gezeigten relativ großen Winkels zwischen der ersten Transporteinrichtung 12 und den zweiten Transporteinrichtungen 14 kann durch die oben beschriebene Steuerung der Intensität der Ablenkdüsen eine allmähliche Änderung der Förderrichtung und damit eine flache Ablenkkurve erreicht werden.

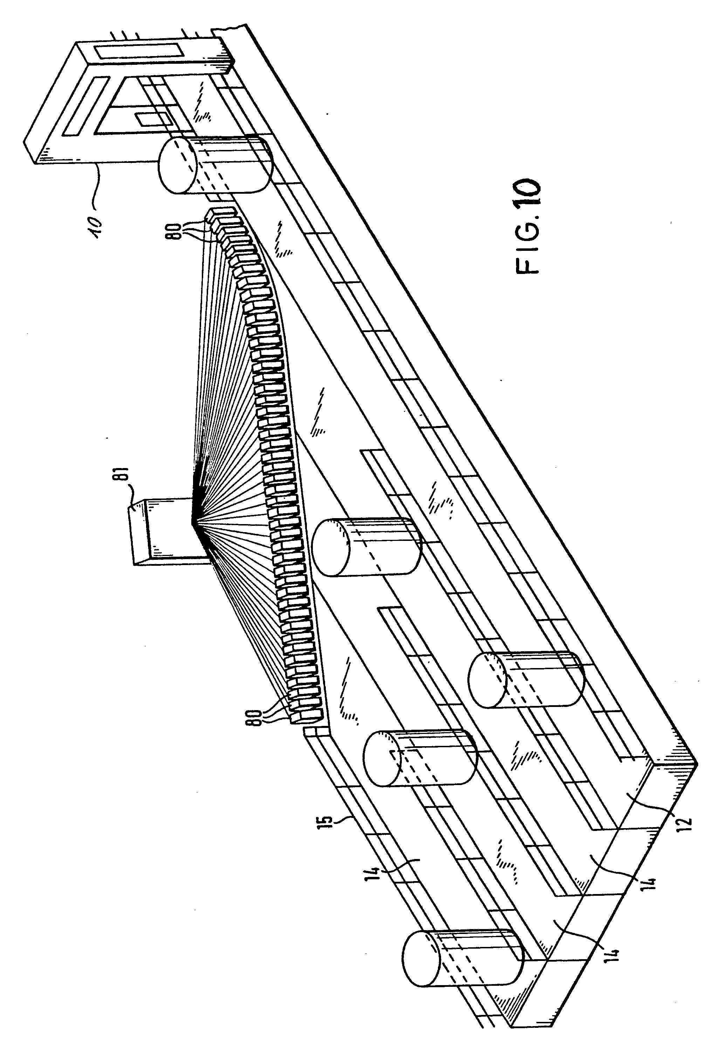

Für die Ablenkdüsen wurden bisher eine grundlegende Ausführungsform angegeben, nämlich Blasdüsen. Für die Ablenkeinrichtungen kommen jedoch noch weitere Ausführungsformen in Frage, zum Beispiel Saugdüsen, die an dem abknickenden Teil des Geländers 15 angeordnet sind und die abzulenkenden Gegenstände durch Erzeugung eines Unterdruckes auf der der zweiten Transporteinrichtung zugewandten Seite schrittweise ablenken (Fig. 10). Während bei der Vorrichtung mit Blasdüsen die Geschwindigkeit des virtuell mitlaufenden Fluidkissens etwa gleich der Geschwindigkeit der ersten Transporteinrichtung ist, wird bei den mit Saugdüsen 80 arbeitenden Vorrichtungen die Geschwindigkeit des jeweiligen Kraftfeldes durch den Quotienten aus Geschwindigkeit der ersten Transporteinrichtung und dem Cosinus des Winkels, in dem die Gegenstände abgelenkt werden, bestimmt. Wesentlich ist, daß die Ablenkdüsen in Förderrichtung ortsfest sind und jede Ablenkdüse eine solche Kraft auf einen abzulenkenden Gegenstand ausübt, daß dieser um einen Teilbetrag der Gesamtablenkung von der ersten Transporteinrichtung auf die zweite Transporteinrichtung abgelenkt wird. Die auf den Gegenstand ausgeübte Kraft kann dabei sowohl eine stoßende als auch eine ziehende Kraft sein. Neben der Ansteuerung über elektrisch betätigte Ventile können die Saugdüsen 80 auch über einen Drehschieber gesteuert werden. Kurz vor und in dem abknickenden Teil des Geländers 15 sitzt dabei eine größere Anzahl (etwa 100) Saugdüsen 80 (z. B. 15 mm breit) dicht an dicht. Die Zuleitungen führen zu einer Drehschiebersteuerung 81, die mit dem Antrieb der Transporteinrichtung gekoppelt ist, wobei entsprechend dem Cosinus des Ausleitwinkels übersetzt (z. B. 1 : 1,06 bei 20°) wird. Diese Drehschiebersteuerung 81 öffnet und schließt die Zuleitungen zu den Saugdüsen derart, daß einzelne Unterdruckgebiete (z. B. drei Düsen breit) in festen Abständen von z. B. 3 Düsen die Ablenkstrecke virtuell entlangwandern. Es ist also ständig etwa die Hälfte aller Saugdüsen eingeschaltet, so daß der von dem Sauggebläse erzeugte Unterdruck relativ konstant bleibt.

Die auf der ersten Transporteinrichtung ankommenden Gegenstände werden durch eine Schnecke in die Abfolge der Unterdruckgebiete eingetaktet. Die Eintaktung kann auch durch mehrere Saugdüsen im einleitenden geraden Teil des Geländers erfolgen. Danach werden die Gegenstände eng entlang den Saugdüsen geführt.

Ablenkeinrichtungen, die eine ziehende Kraft ausüben, eignen sich insbesondere bei Vorrichtungen, die mit mehreren zweiten Transporteinrichtungen arbeiten. Die Gegenstände werden dabei durch eine über alle zweiten Transporteinrichtungen hinwegführende Saugeinrichtung mit einer Anzahl von Saugdüsen bis zu der gewünschten zweiten Transporteinrichtung geführt und dann freigegeben. Bestimmte Saugdüsen bzw. Saugdüsengruppen sind dabei mit Preßluft-Injektoren versehen, die über Magnetventile angesteuert werden können, und im angesteuerten Zustand das Entstehen eines Unterdruckgebietes vor der betreffenden Saugdüse verhindern. Somit kann man den am Geländer entlanggezogenen Gegenstand an vorherbestimmten Stellen von den Saugdüsen ablösen.

Die Steuerung der Ablenkdüsen erfolgt in allen Fällen in der im Zusammenhang mit den Blasdüsen-Ablenkeinrichtungen beschriebenen Weise, nämlich in Abhängigkeit von der Weiterbewegung des abzulenkenden Gegenstandes.

Die Erfindung ist auch bei Ablenkvorrichtungen anwendbar, bei denen die Gegenstände nicht auf Transporteinrichtungen befördert werden, sondern sich auf einer zum Beispiel durch die Schwerkraft der Erde bestimmten Bahnkurve bewegen oder frei fallen. Beim Sortieren von Bruchglas nach der Farbe können zum Beispiel Glasbehälter einer bestimmten Farbe durch Blasdüsen auf eine zweite Bahn geblasen werden, die zu einer anderen Auffangvorrichtung führt.

### Beispiel 1

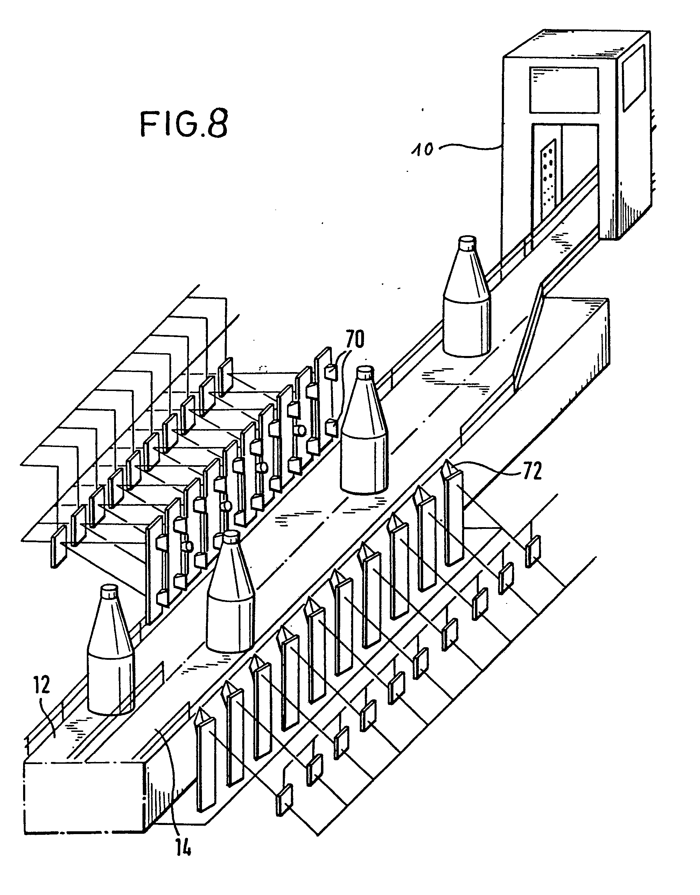

Nachfolgend wird anhand der Fig. 1 bis 3 und 8 eine Ablenkvorrichtung mit Blasdüsen beschrieben.

Die Ablenkvorrichtung besteht aus 10 einzeln ansteuerbaren Blasdüsen, wobei der Abstand zwischen zwei Blasdüsen jeweils ca. 2 cm beträgt. Die Blasdüsen bestehen aus je einem 15 cm hohen senkrechten Träger an dem jeweils zwei 5 cm hohe Flachstrahldüsen so befestigt sind, daß die längere Abmessung der Düsenöffnung senkrecht steht. Jede Flachstrahldüse besteht aus 16 übereinander angeordneten runden Vollstrahldüsen mit 0,5 mm Durchmesser, die von einer gemeinsamen Druckluftquelle gespeist werden. Die Unterkante der unteren Flachstrahldüse ist bündig mit der Oberkante der Transporteinrichtungen, während die Unterkante der oberen Flachstrahldüse sich etwa 10 cm über dem Niveau der Transporteinrichtungen befindet.

Die Düsen sind so ausgerichtet, daß sie senkrecht zur Förderrichtung und parallel zur Ebene der Transporteinrichtung blasen.

Über zwei gleich lange Schläuche werden beide Düsen an ein 2/2-Wege-Ventil von 1/4 Zoll angeschlossen, wobei die Intensität der oberen Flachstrahldüse durch ein Reduzierventil in der Zuleitung etwas abgeschwächt ist.

Alle unteren Düsen der Sortiereinrichtung blasen mit der gleichen Intensität; ebenso die oberen, aber mit schwächerer Intensität als die unteren. Zwischen den Düsen b und c, d und e, f und g, h und i ist je ein Ultraschallwandler 71 etwa 10 cm über dem Niveau der Transporteinrichtung befestigt.

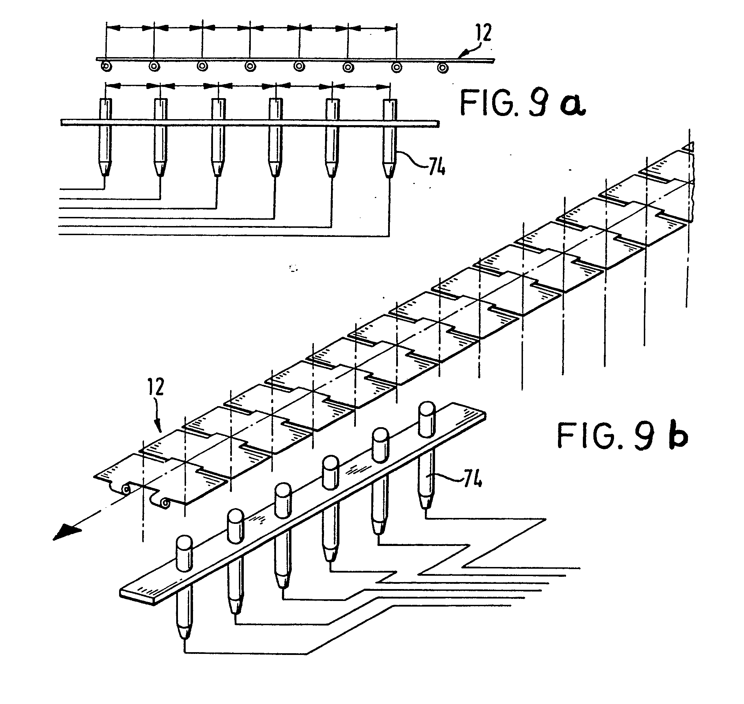

An einer Prüflinie 32 (Triggerlichtschranke) etwa 15 cm vor der ersten Düse wird festgestellt, ob die beiden Prüfbedingungen Füllstand und Verschluß erfüllt sind oder nicht. Bei Nichterfüllung »merkt sich« die mit einem Mikroprozessor arbeitende Blasdüsen-Steuereinrichtung die fehlerhafte Flasche, d. h. die Stelle auf der Transporteinrichtung (Gliederkette), wo dieselbe steht. Über einen Vielfach-Induktivabtaster 74 (Fig. 9) wird pro 6 mm Gliederkettenvorschub jeweils ein Taktsignal an die Steuerung abgegeben.

Dieser Vielfach-Induktivabtaster (Fig. 9) besteht aus 6 einzelnen induktiven Näherungsschaltern, die mit 44,3 mm Mittelabständen dicht unter der Gliederkette montiert sind. Die Scharniere der Gliederkette, die in 38,1 mm Mittelabständen über die Initiatoren hinweggleiten, erzeugen dann die gewünschten Taktimpulse. Durch Aufsummieren dieser Impulse »weiß« die Steuerung genau, wann die fehlerhafte Flasche sich vor Segment a, b, c usw. befindet.

Weiterhin wird aus den Taktimpulsen der Induktivabtaster die Transportgeschwindigkeit errechnet und die betreffenden Ventile werden je nach Transportgeschwindigkeit früher (schnell) oder später (langsam) angesteuert.

Ist nun eine fehlerhafte Flasche abzulenken, so wird durch aufeinanderfolgendes Einschalten der Düsen ein mitlaufendes Luftkissen (Luftwelle) erzeugt. Das Auftreffen der Luft auf der Oberfläche der abzulenkenden Flasche erzeugt Ultraschall. Dieser wird durch jeweils einen der oben beschriebenen Wandler aufgenommen, über Verstärker selektiv (38—40 kHz) verstärkt gleichgerichtet und mit einem Sollwert verglichen.

Wird dieser Sollwert nicht erreicht, d. h. ist die Flasche bereits weit genug abgelenkt, dann verhindert die Blasdüsen-Steuereinrichtung das Einschalten weiterer Düsen, so daß das Luftkissen für die abgelenkte Flasche verschwindet. Für leichte Flaschen bei langsamer Transportgeschwindigkeit wird dies sehr früh geschehen, während schwere Flaschen bei hoher Transportgeschwindigkeit ein auf der gesamten Ablenkstrecke mitlaufendes Luftkissen (Luftwelle) benötigen.

## Patentansprüche

1. Vorrichtung zum seitlichen Ablenken von bestimmten, nach einem Merkmal ausgewählten Gegenständen von einer ersten Transporteinrichtung (12) auf eine zweite Transporteinrichtung (14) der abgelenkten Gegenstände, mit einer Mehrzahl von in Transportrichtung ortsfest angeordneten und die abzulenkenden Gegenstände schrittweise von der ersten Transporteinrichtung (12) auf die zweite Transporteinrichtung (14) ablenkenden, aufeinanderfolgend aktivierbaren Blasdüsen (70) oder Saugdüsen (80) und mit einer oder mehreren Abtast- und Steuereinrichtungen (Lichtschranken 34, 35), die von den Gegenständen Steuersignale zur Steuerung der Blas- bzw. Saugdüsen in Abhängigkeit von der Position jedes Gegenstandes in Transportrichtung ableiten,

gekennzeichnet

durch eine Erkennungseinrichtung (Ultraschallwandler 71), von deren Ausgangssignal die Position und/oder die Geschwindigkeit eines abzulenkenden Gegenstandes senkrecht zur Transportrichtung abgeleitet werden oder eine Einrichtung zur Bestimmung der Form und/ oder des Gewichts der abzulenkenden Gegenstände, wobei die Steuereinrichtung den Ablenkvorgang nach zuvor eingegebenen Erfahrungswerten steuert und durch eine Steuereinrichtung, die die Anzahl der zur Ablenkung eines Gegenstandes eingeschalteten Blas- bzw. Saugdüsen derart beschränkt und/oder deren Intensität derart steuert, daß der Gegenstand auf einer möglichst flachen Ablenkkurve auf die zweite Transporteinrichtung (14) abgelenkt wird.

2. Vorrichtung nach Anspruch 1, dadurch gekennzeichnet, daß die Steuereinrichtung die Reihe der eingeschalteten Blasdüsen unterbricht, wenn der Gegenstand eine Geschwindigkeitskomponente senkrecht zur ersten Transporteinrichtung erreicht hat, die so hoch ist, daß er sich aufgrund seiner Massenträgheit gänzlich auf die zweite Transporteinrichtung hinüberbewegt.

## Claims

1. Apparatus for laterally deflecting specific articles selected by a criterion from a first conveying device (12) to a second conveying device (14) of the deflected articles, comprising a plurality of successively activatable blowing nozzles (70) or sucking nozzles (80) which are arranged stationary in the conveying direction and deflect said articles to be deflected stepwise from the first conveying device (12) to the second conveying device (14) and one or mor sensing and control means (light barriers) (34, 35) deriving control signals from the articles for control of the blowing or, respectively, sucking nozzles in response to the position of each article in the conveying direction,

characterized

by a detecting device (ultrasonic transducer 71) from the output signal of which the position and/ or the velocity, at right angles to the conveying direction, of an article to be deflected are derived or a device for determining the shape and/or the weight of the articles to be deflected, the control means controlling the deflection action in accordance with experience data previously fed in and by a controlling device which limits the number of the blowing or sucking nozzles activated for the deflection of an article such that and/or controls their intensities such that the article is deflected on as flat a deflection curve as possible to the second conveying device (14).

2. Apparatus according to claim 1 characterized in that the controlling device interrupts the series of activated blowing nozzles as soon as the article has reached such a high velocity component at right angles to the conveying direction that it moves completely onto the second conveying device by virtue of its inertia.

## Revendications

1. Dispositif de déviation latérale de certains objets, sélectionnés d'après une particularité, d'un premier système de transport (12) sur und deuxième système de transport (14) des objets déviés, avec une pluralité de buses de soufflage (70) ou de buses d'aspiration (80), disposées à demeure dans le système de transport et déviant progressivement les objets à dévier du premier système de transport (12) sur le deuxième système de transport (14), pouvant être activées les unes à la suite des autres, et avec un ou plusieurs dispositifs détecteurs et de commandes (barrages photoélectriques 34, 35), qui déclenchent à partir des objets des signaux de commande destinés à commander les buses de soufflage ou d'aspiration en fonction de la position de chaque objet dans la direction du transport, caractérisé en ce qu'il comprend un dispositif d'identification (transducteur à ultrasons 71), dont le signal de sortie définit la position et/ou la vitesse d'un objet à dévier perpendiculairement à la direction du transport, ou un dispositif pour déterminer la forme et/ou le poids des objets à dévier, le dispositif de commande commandant l'opération de déviation, en fonction de valeurs expérimentales préalablement introduites, et qu'il possède un dispositif de commande qui limite le nombre des buses de soufflage ou d'aspiration mises en service pour dévier un objet, et/ou commande leur intensité, de telle sorte que l'objet soit dévié sur le deuxième système de transport (14) selon une courbe de déviation aussi aplatie que possible.

2. Dispositif selon la revendication 1, caractérisé en ce que le dispositif de transport interrompt la série des buses de soufflage mises en service quand l'objet a atteint une composante de sa vitesse perpendiculairement au premier système de transport tellement élevée que, du fait de son inertie de masse, il passe complètement sur le deuxième système de transport.

FIG.1

FIG.2

# FIG.3

FIG.4

FIG.6

FIG.5

# FIG. 7

FIG.8

FIG. 9 a

FIG. 9 b

FIG.10

0 029 614

FIG.11